# EUROPÄISCHE PATENTSCHRIFT

(11) **EP 3 297 811 B1**
(45) Veröffentlichungstag und Bekanntmachung des Hinweises auf die Patenterteilung: **01.09.2021**
(21) Anmeldenummer: 16736385.2
(22) Anmeldetag: 06.07.2016
(51) Int. Cl.: B29C 64/214, B29C 64/295, B29C 64/165, B29C 64/141, B29C 64/153, B33Y 30/00

(54) **VERFAHREN UND VORRICHTUNG ZUM HERSTELLEN EINES DREIDIMENSIONALEN OBJEKTS**
METHOD AND DEVICE FOR PRODUCING A THREE-DIMENSIONAL OBJECT
PROCÉDÉ ET DISPOSITIF DE FABRICATION D'UN OBJET TRIDIMENSIONNEL

(30) Priorität: 10.07.2015 DE 102015213011
(43) Veröffentlichungstag der Anmeldung: 28.03.2018
(73) Patentinhaber: EOS GmbH Electro Optical Systems, 82152 Krailling (DE)
(72) Erfinder: PATERNOSTER, Stefan, 82346 Andechs (DE); GRÜNBERGER, Stefan, 81739 München (DE)
(74) Vertreter: Prüfer & Partner mbB Patentanwälte · Rechtsanwälte
(86) Internationale Anmeldenummer: PCT/EP2016/001152
(87) Internationale Veröffentlichungsnummer: WO 2017/008890

(56) Entgegenhaltungen:
- EP-A1- 2 859 973
- WO-A1-2008/055615
- DE-A1-102005 022 308

## Beschreibung

Die vorliegende Erfindung bezieht sich auf ein Verfahren und eine Vorrichtung zum Herstellen eines dreidimensionalen Objekts durch schichtweises Aufbringen und selektives Verfestigen eines pulverförmigen Aufbaumaterials.

Verfahren und Vorrichtungen dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen mit einem Laserstrahl selektiv verfestigt.

Dabei wird jedoch oftmals nicht die volle, zum Verfestigen erforderliche Energie durch den Laserstrahl aufgebracht, sondern das Aufbaumaterial vor dem Verfestigen vorgeheizt. DE 10 2005 022 308 A1 beschreibt eine Lasersintervorrichtung, bei der das pulverförmige Aufbaumaterial mittels eines über eine Arbeitsebene hin- und herbewegbaren Beschichters in Form einer aus zwei steifen Klingen bestehenden Doppelklinge aufgebracht wird. Zum Vorwärmen einer aufgebrachten, aber noch nicht gesinterten Pulverschicht ist eine Heizeinrichtung in Form eines oder mehrerer Heizstrahler, beispielsweise Infrarotstrahler, oberhalb der Arbeitsebene angeordnet. Ferner enthält der Beschichter eine Beschichterheizung in Form von in den Beschichterklingen angeordneten Heizdrähten.

WO 2008/055615 A1 beschreibt ebenfalls eine Lasersintervorrichtung mit einem hin- und herbewegbaren Beschichter, welcher eine Heizeinrichtung enthalten kann.

Die Aufgabe der vorliegenden Erfindung besteht darin, ein alternatives bzw. verbessertes Verfahren bzw. eine alternative bzw. verbesserte Vorrichtung zum Herstellen eines dreidimensionalen Objekts durch schichtweises Aufbringen und selektives Verfestigen eines pulverförmigen Aufbaumaterials bereitzustellen.

Diese Aufgabe wird gelöst durch ein Verfahren gemäß Anspruch 1 bzw. eine Vorrichtung gemäß Anspruch 7. Weiterbildungen der Erfindung sind jeweils in den Unteransprüchen angegeben. Dabei können die Verfahren auch durch die untenstehenden bzw. in den Unteransprüchen ausgeführten Merkmale der Vorrichtungen weitergebildet sein oder umgekehrt bzw. die Merkmale der Vorrichtungen können auch untereinander jeweils zur Weiterbildung genutzt werden. Das erfindungsgemäße Verfahren zum Herstellen eines dreidimensionalen Objekts durch schichtweises Aufbringen und selektives Verfestigen eines pulverförmigen Aufbaumaterials enthält die Schritte: Aufbringen einer Schicht des pulverförmigen Aufbaumaterials auf ein Baufeld mittels eines Beschichters, der eine über das Baufeld in einer Beschichtungsrichtung fahrende Beschichtungseinheit enthält, selektives Verfestigen der aufgebrachten Pulverschicht an Stellen, die einem Querschnitt des herzustellenden Objekts entsprechen, und Wiederholen der Schritte des Aufbringens und des selektiven Verfestigens, bis das Objekt fertiggestellt ist. Dabei wird das auf das Baufeld aufzubringende pulverförmige Aufbaumaterial im Beschichter vor dem Aufbringen mittels einer Strahlungsheizung lokal beheizt. Dadurch ist es möglich, das pulverförmige Aufbaumaterial bereits vor dem Aufbringen; im Beschichter vorzuheizen, ohne dass dazu eine anderweitige Heizvorrichtung in den Beschichter integriert werden muss. Als "lokale" Beheizung des pulverförmigen Aufbaumaterials im Beschichter wird im Rahmen der Erfindung verstanden, dass die Strahlungsheizung nicht global, etwa über das gesamte Baufeld, wirkt, sondern gezielt ausgebildet (dimensioniert) und angeordnet bzw. ausgerichtet ist, um möglichst genau das pulverförmige Aufbaumaterial im Beschichter zu heizen. Die betreffende Strahlungsheizung ist also bevorzugt im Wesentlichen ausschließlich auf das pulverförmige Aufbaumaterial im Beschichter gerichtet.

Weiterhin ist zu bemerken, dass der Beschichter zwingend bewegliche Teile (nämlich mindestens die Beschichtungseinheit) umfasst, jedoch zusätzlich auch stationäre, das heißt fest stehende Teile umfassen kann. Beispiele hierfür werden weiter unten erwähnt. Der Beschichter kann somit auch voneinander im Betrieb zeitweise weiter beabstandete Teile umfassen und ist insofern auch als "Beschichtungsanordnung" im Sinne einer Anordnung mehrerer für den Beschichtungsvorgang im weiteren Sinne zusammenwirkender Teile bzw. Komponenten zu verstehen.

Als Beschichtungseinheit kann beispielweise eine Auftragsklinge verwendet werden, die dann mit einem mindestens in der Beschichtungsrichtung und deren Gegenrichtung abgeschlossenen Behälter (nämlich einem unten im Detail beschriebenen Vorheizmodul) zum Beschichter ergänzt wird. Das lokale Beheizen mittels der Strahlungsheizung erfolgt dann im Vorheizmodul, aus dem nach dem Beheizen das pulverförmige Aufbaumaterial vor die Auftragsklinge gebracht wird. Bevorzugt ist es, dass die Beschichtungseinheit selbst in Beschichtungsrichtung und in deren Gegenrichtung mindestens bereichsweise abgeschlossen ist, so dass zumindest auch direkt lokal in der Beschichtungseinrichtung mittels der Strahlungsheizung eine Beheizung mittels der betreffenden (lokal wirkenden) Strahlungsheizung durchgeführt werden kann.

Erfindungsgemäß umfasst die Strahlungsheizung, die das auf das Baufeld aufzubringende pulverförmige Aufbaumaterial im Beschichter vor dem Aufbringen beheizt, eine lokal wirkende Strahlungsheizung, die im Wesentlichen dimensioniert ist, um das Beheizen des pulverförmigen Aufbaumaterials im Beschichter durchzuführen. Sie wird bevorzugt zusätzlich zu einer nichtlokal wirkenden Strahlungsheizung betrieben, welche letztere so dimensioniert ist, dass sie flächig das pulverförmige Aufbaumaterial nach der Aufbringung auf im Wesentlichen das gesamte Baufeld mittels Strahlung beheizt. Dadurch kann das pulverförmige Aufbaumaterial wirkungsvoll und effizient vorgeheizt werden.

Vorzugsweise wird der Beschichter an einem Befüllungsort mit pulverförmigem Aufbaumaterial befüllt und die Strahlungsheizung ist in oder gegen Beschichtungsrichtung von dem Befüllungsort beabstandet. Dadurch wird unter Anderem verhindert, dass die Strahlungsheizung bereits den an dem Befüllungsort befindlichen Pulvervorrat vorheizt.

Erfindungsgemäß ist die Strahlungsheizung ortsfest angeordnet und der Beschichter wird vor dem Aufbringen einer Pulverschicht zu dem Ort der Strahlungsheizung (d. h. zu dem Ort, an dem die Strahlungsheizung in den Beschichter einstrahlen kann) verfahren zum Beheizen des in ihm enthaltenen pulverförmigen Aufbaumaterials durch die Strahlungsheizung. Das ermöglicht einen besonders einfachen Aufbau der den Beschichter und die Strahlungsheizung enthaltenden Vorrichtung, da der Beschichter (bzw. Teile dessen, nämlich mindestens die Beschichtungseinheit) ja ohnehin beweglich angeordnet sein muss.

Alternativ wird die Strahlungsheizung gemeinsam mit dem Beschichter verfahren. Das verhindert ein Abkühlen des in dem Beschichter enthaltenen pulverförmigen Aufbaumaterials während des Verfahrens des Beschichters.

Der Beschichter umfasst ein in mindestens einer bestimmungsgemäßen Betriebsstellung zwischen einer Beschichtungseinheit des Beschichters und der Strahlungsheizung angeordnetes Vorheizmodul, wobei das Vorheizmodul eine Portion des pulverförmigen Aufbaumaterials aufnimmt, das pulverförmige Aufbaumaterial mindestens auch im Vorheizmodul mittels der Strahlungsheizung beheizt wird und das beheizte pulverförmige Aufbaumaterial vom Vorheizmodul an die Beschichtungseinheit (direkt oder indirekt) weitergegeben wird. Dadurch wird es ermöglicht, das pulverförmige Aufbaumaterial gleichmäßig in dem Vorheizmodul zu erwärmen und im erwärmten Zustand an die Beschichtungseinheit abzugeben, wodurch die Temperaturverteilung des pulverförmigen Aufbaumaterials in dem Beschichter homogenisiert wird.

Zusätzlich kann der Beschichter zwischen dem Vorheizmodul und der Beschichtungseinheit (d. h. in Dosierrichtung des pulverförmigen Aufbaumaterials zwischen dem Vorheizmodul in der Beschichtungseinheit angeordnet) eine weitere Einheit umfassen, nämlich insbesondere eine Dosiereinheit. Eine solche Einheit wird bevorzugt beim Aufbringen der Schicht gemeinsam mit der Beschichtungseinheit verfahren und dosiert das pulverförmige Aufbaumaterial (insbesondere während des Verfahrens, speziell kontinuierlich) in die Beschichtungseinheit.

Als Beispiel soll folgende Anordnung dienen: Das Vorheizmodul ist eine ortsfeste Einheit, in der wie oben beschrieben lokale das pulverförmige Aufbaumaterial beheizt wird. Die Dosiereinheit fährt mit der Beschichtungseinheit während des Aufbringens der Schicht mit (über) der Beschichtungseinheit mit. In diesem Ausführungsbeispiel sind sowohl das Vorheizmodul als auch die Dosiereinheit fluidisiert.

Das Vorheizmodul hat eine im Vergleich zum Dosiermodul größere durch die Strahlungsheizung beheizbare Fläche, um die lokale Beheizung im Sinne der Erfindung möglichst effektiv zu gestalten. Durch die Kombination der größeren Fläche und der Fluidisierung wird das pulverförmige Aufbaumaterial effektiv beheizt und gut durchmischt, wobei durch den guten Kontakt der Partikel des pulverförmigen Aufbaumaterials auch ein guter Wärmeaustausch unter den Partikeln möglich ist. Diese Durchmischung kann zusätzlich mit einem Rührwerk unterstützt werden.

In der Dosiereinheit wird das pulverförmige Aufbaumaterial bevorzugt nicht nochmal lokal durch eine korrespondierende Strahlungsheizung beheizt, sondern höchstens noch aktiv oder passiv warmgehalten.

Auch vor dem Befördern des pulverförmigen Aufbaumaterials in das Vorheizmodul kann es bereits in einem Vorbehälter auf eine Schwellentemperatur insbesondere unterhalb seiner Glasübergangstemperatur beheizt werden, etwa durch eine Wandbeheizung eines Vorratsbehälters.

Vorzugsweise wird das Vorheizmodul gemeinsam mit der Beschichtungseinheit verfahren, und in weiter bevorzugter Weise erfolgt das Beheizen des pulverförmigen Aufbaumaterials mittels der Strahlungsheizung während des Verfahrens des Vorheizmoduls gemeinsam mit der Beschichtungseinheit. Dadurch kann die Temperaturverteilung des pulverförmigen Aufbaumaterials in dem Beschichter weiter homogenisiert werden

Vorzugsweise wird das auf das Baufeld aufzubringende pulverförmige Aufbaumaterial während des Beheizens zusätzlich fluidisiert, in weiter bevorzugter Weise mittels Durchleiten eines beheizten Gases, bevorzugt eines Schutzgases. Dadurch wird eine besonders gute Durchmischung und somit eine weiter homogenisierte Temperaturverteilung des pulverförmigen Aufbaumaterials in dem Beschichter erzielt.

Vorzugsweise ist die Strahlungsheizung in einem vordefinierten Abstand von der Oberfläche des zu beheizenden pulverförmigen Aufbaumaterials angeordnet. Dadurch wird zum Beispiel eine Verunreinigung der Strahlungsheizung durch auffliegendes Pulver vermieden.

Der erfindungsgemäße Aus- oder Nachrüstungssatz für eine Vorrichtung zum Herstellen eines dreidimensionalen Objekts durch selektives Verfestigen von pulverförmigem Aufbaumaterial umfasst einen zum Aufbringen einer Schicht des pulverförmigen Aufbaumaterials auf ein Baufeld ausgebildeten Beschichter, der eine über das Baufeld in einer Beschichtungsrichtung fahrende Beschichtungseinheit enthält, die in der Vorrichtung in einer Beschichtungsrichtung fahrbar ist, und eine Strahlungsheizung, die dazu ausgebildet ist, in Zusammenwirken mit dem Beschichter das auf das Baufeld aufzubringende pulverförmige Aufbaumaterial im Beschichter vor dem Aufbringen lokal zu beheizen. Dadurch ist es beispielsweise möglich, bestehende Vorrichtungen nachträglich für das erfindungsgemäße Verfahren umzurüsten.

Vorzugsweise ist die Strahlungsheizung in den Beschichter integriert. Dadurch kann die Strahlungsheizung gemeinsam mit der Beschichtereinheit verfahren werden.

Das erfindungsgemäße Vorheizmodul ist insbesondere, aber nicht zwangsläufig, für einen Aus- oder Nachrüstsatz, wie er oben beschrieben ist, vorgesehen und ausgebildet. Es enthält einen Behälter zur Aufnahme von pulverförmigem Aufbaumaterial und eine Dosiervorrichtung zur Abgabe des durch die Strahlungsheizung beheizten pulverförmigen Aufbaumaterials an die in dem Beschichter enthaltene Beschichtungseinheit bzw. an die oben bereits erwähnte Einheit zwischen dem Vorheizmodul und der Beschichtungseinheit, etwa die oben beschriebene Dosiereinheit. Dadurch ist es unter Anderem möglich, die Vorgänge des Vorheizens und des Beschichtens räumlich und zeitlich voneinander zu trennen. Eine solche räumliche Trennung ist auch bei Verwendung einer nicht lokalen, also globalen, Strahlungsheizung möglich, weshalb das erfindungsgemäße Vorheizmodul nicht zwangsläufig zur Weiterbildung des erfindungsgemäßen Aus- oder Nachrüstsatzes ausgebildet sein muss.

Vorzugsweise enthält das Vorheizmodul weiter mindestens eines der folgenden Elemente:
- eine Fluidisiereinrichtung zum Fluidisieren des in dem Behälter aufgenommenen pulverförmigem Aufbaumaterials,
- ein Rührwerk zum Umrühren des in dem Behälter aufgenommenen pulverförmigem Aufbaumaterials,
- eine Freiblaseinrichtung zum Freiblasen der Strahlungsheizung von eventuell aufgewirbeltem pulverförmigem Aufbaumaterial. Durch die Fluidisiereinrichtung und/oder das Rührwerk wird etwa eine besonders gute Durchmischung und somit eine weiter homogenisierte Temperaturverteilung des pulverförmigen Aufbaumaterials in dem Beschichter erzielt. Durch die Freiblaseinrichtung wird zum Beispiel eine Verunreinigung der Strahlungsheizung durch auffliegendes Pulver vermieden.

Die erfindungsgemäße Vorrichtung zum Herstellen eines dreidimensionalen Objekts durch selektives schichtweises Verfestigen von pulverförmigem Aufbaumaterial umfasst einen in einer Beschichtungsrichtung über ein Baufeld bewegbaren Beschichter, der eine über das Baufeld in einer Beschichtungsrichtung fahrende Beschichtungseinheit enthält, zum Aufbringen einer Schicht des pulverförmigen Aufbaumaterials auf das Baufeld, eine Verfestigungsvorrichtung zum selektives Verfestigen der aufgebrachten Pulverschicht an Stellen, die einem Querschnitt des herzustellenden Objekts entsprechen, und eine Strahlungsheizung. Die Vorrichtung ist ausgebildet und/oder gesteuert, die Schritte des Aufbringens und des selektiven Verfestigens zu wiederholen, bis das Objekt fertiggestellt ist, und das auf das Baufeld aufzubringende pulverförmige Aufbaumaterial im Beschichter vor dem Aufbringen mittels der Strahlungsheizung lokal zu beheizen. Dadurch ist es möglich, das erfindungsgemäße Verfahren mittels einer Vorrichtung zum Herstellen eines dreidimensionalen Objekts auszuführen.

Vorzugsweise enthält die Vorrichtung weiter einen Aus- oder Nachrüstsatz und/oder ein Vorheizmodul, wie sie oben beschrieben sind. Damit werden auch in der Vorrichtung die für den Aus- oder Nachrüstsatz und/oder das Vorheizmodul beschriebenen Wirkungen erfüllt.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht eines Ausführungsbeispiels einer Vorrichtung zum schichtweisen Herstellen eines dreidimensionalen Objekts, gemäß einer ersten Ausführungsform der vorliegenden Erfindung.
- Fig. 2: ist eine vergrößerte schematische Schnittansicht eines Ausschnitts, der in Fig. 1 von einer gestrichelten Linie umrahmt ist, während des Aufbringens einer Pulverschicht.
- Fig. 3: ist eine schematische Schnittansicht eines Vorheizmoduls gemäß einer zweiten Ausführungsform der vorliegenden Erfindung.

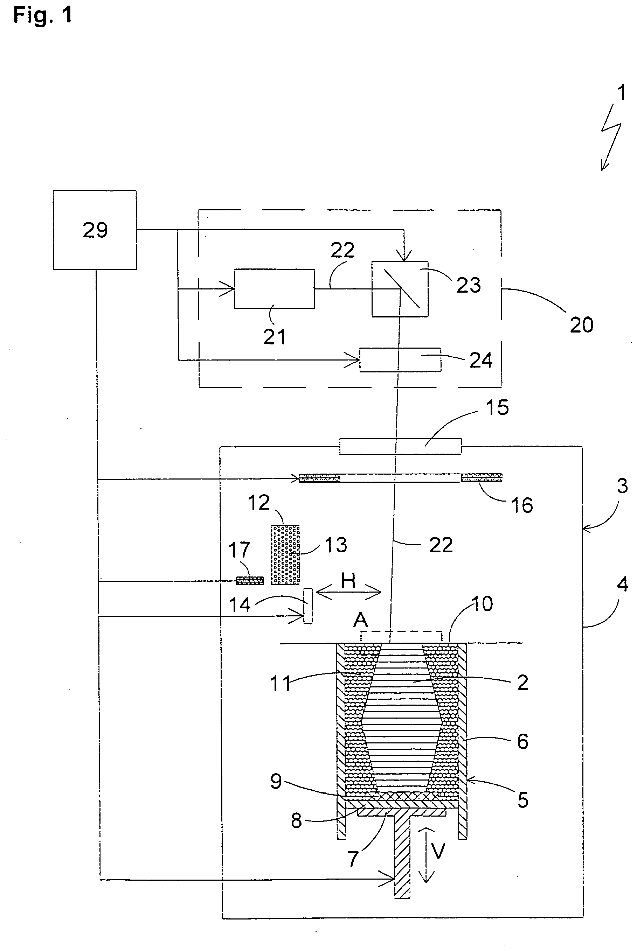

Im Folgenden wird mit Bezug auf Fig. 1 ein Ausführungsbeispiel einer Vorrichtung 1 gemäß einer ersten Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. In dem Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Pulver und Prozess kann auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient. In Fig. 1 ist das in dem Behälter 5 auf der Bauplattform 9 zu bildende Objekt 2 unterhalb einer Arbeitsebene 10 in einem Zwischenzustand dargestellt mit mehreren verfestigten Schichten, umgeben von unverfestigt gebliebenem Aufbaumaterial 11.

Die Lasersintervorrichtung 1 enthält weiter einen Vorratsbehälter 12 für ein durch elektromagnetische Strahlung verfestigbares pulverförmiges Aufbaumaterial 13 und einen in einer horizontalen Richtung H bewegbaren Beschichter 14 zum Aufbringen des Aufbaumaterials 13 auf die Arbeitsebene 10. An ihrer Oberseite enthält die Wandung 4 der Prozesskammer 3 ein Einkoppelfenster 15 für eine zum Verfestigen des Pulvers 13 dienende Strahlung. In der Prozesskammer sind ferner eine globale Strahlungsheizung 16 und eine lokale Strahlungsheizung 17 angeordnet. Die globale Strahlungsheizung 16 ist dazu ausgelegt, das gesamte Baufeld zu beheizen, also den Bereich der Arbeitsebene 10, der innerhalb der oberen Öffnung des Behälters 5 liegt, während die lokale Strahlungsheizung 16 lediglich dazu ausgelegt ist, einen lokal begrenzten Bereich zu beheizen.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über das Einkoppelfenster 15 auf die Arbeitsebene 10 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 7 um eine Höhe abgesenkt, die der gewünschten Schichtdicke entspricht. Durch Verfahren des Beschichters 14 über die Arbeitsebene 10 wird dann eine Schicht des pulverförmigen Aufbaumaterials 13 aufgebracht. Das Aufbringen erfolgt zumindest über den gesamten Querschnitt des herzustellenden Objekts 2, vorzugsweise über das gesamte Baufeld. Die aufgebrachte Pulverschicht wird durch die globale Strahlungsheizung 16 vorgeheizt. Anschließend wird der Querschnitt des herzustellenden Objekts 2 von dem Laserstrahl 22 abgetastet, so dass das pulverförmige Aufbaumaterial 13 an den Stellen verfestigt wird, die dem Querschnitt des herzustellenden Objekts 2 entsprechen. Diese Schritte werden solange wiederholt, bis das Objekt 2 fertiggestellt ist und dem Bauraum entnommen werden kann.

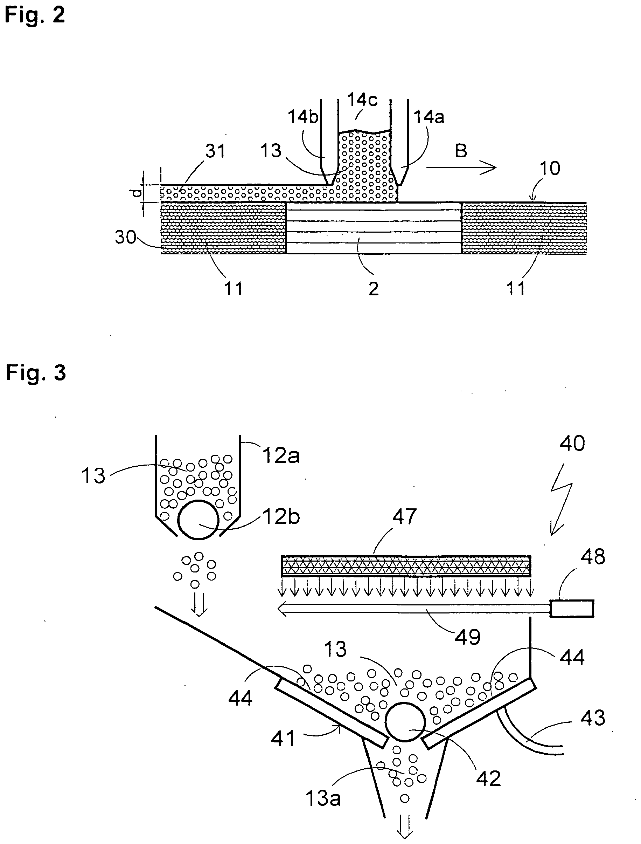

Fig. 2 zeigt schematisch vergrößert einen Ausschnitt A, der in Fig. 1 von einer gestrichelten Linie umrahmt ist.

Nach dem Aufbringen und Verfestigen einer Pulverschicht 30 ist der darin liegende verfestigte Teil des herzustellenden Objekts 2 von unverfestigt gebliebenem Pulver 11 umgeben. Auf diese zuvor aufgebrachten und selektiv verfestigten Pulverschicht 30 wird dann mittels einer Bewegung des Beschichters 14 in einer Beschichtungsrichtung B eine weitere Pulverschicht 31 des Aufbaumaterials 13 aufgetragen.

Wie in Fig. 2 gezeigt enthält der Beschichter 14 eine Beschichtungseinheit mit einer in der Beschichtungsrichtung B vorne liegenden Klinge (vordere Klinge 14a) und einer in der Beschichtungsrichtung B hinten liegenden Klinge (hintere Klinge 14b). Diese beiden Klingen schließen einen Zwischenraum 14c in der Beschichtungsrichtung B und in die Gegenrichtung zur Beschichtungsrichtung zumindest teilweise ab. Dieser durch die beiden Klingen 14a, 14b begrenzte Zwischenraum ist dazu ausgebildet, einen Vorrat an pulverförmigem Aufbaumaterial 13 aufzunehmen. Beim Verfahren des Beschichters 14 in der Beschichtungsrichtung B verbleibt ein Teil dieses pulverförmigen Aufbaumaterials 13 auf der vorigen Schicht 30 und wird von der hinteren Klinge 14b zu einer gleichmäßigen dünnen Pulverschicht (31) mit der Dicke d ausgezogen. Während des Aufbringens der Pulverschicht 31 und danach wirkt die globale Strahlungsheizung 16 auf die bereits aufgebrachten Bereiche der Pulverschicht 31 bzw. die fertig aufgebrachte Pulverschicht 31 ein.

Besonders bei hohen zu erreichenden Arbeitstemperaturen, wie sie insbesondere bei der Verarbeitung von Kunststoffpulvern notwendig sind, kann diese Beheizung durch die globale Strahlungsheizung 16 jedoch unzureichend sein. Dafür wird das pulverförmigen Aufbaumaterials 13 bereits vor seinem Aufbringen als Pulverschicht 31 vorgeheizt.

Erfindungsgemäß erfolgt dieses Vorheizen des pulverförmigen Aufbaumaterials 13 mittels der lokalen Strahlungsheizung 17. Diese ist dabei so dimensioniert, dass sie zum Beheizen des pulverförmigen Aufbaumaterials 13 im Beschichter 14 geeignet ist, aber nicht zum Beheizen der gesamten aufgebrachten Pulverschicht 31.

Gemäß der vorliegenden Ausführungsform fährt die Beschichtungseinheit 14a-c des Beschichters 14 zum Aufbringen einer Pulverschicht 31 zunächst zu dem Vorratsbehälter 12 und nimmt dort eine vorbestimmte Menge des pulverförmigen Aufbaumaterials 13 auf. Diese vorbestimmte Pulvermenge ist vorzugsweise gleich oder größer als die Pulvermenge, die zum Auftragen einer Schicht des pulverförmigen Aufbaumaterial 13 benötigt wird. Dann fährt die Beschichtungseinheit 14a-c zu einer Stelle unterhalb der lokalen Strahlungsheizung 17, die in Beschichtungsrichtung B gesehen vor oder hinter dem Vorratsbehälter 12 angeordnet sein kann. Die Strahlungsheizung 17 ist vorzugsweise zumindest in einem vordefinierten vertikalen Abstand von der Oberfläche des zu beheizenden pulverförmigen Aufbaumaterials 13 angeordnet. Vorzugsweise ist sie von dem Vorratsbehälter 12 zumindest um einen vorbestimmten seitlichen Abstand beabstandet. Die von der Beschichtungseinheit 14a-c aufgenommene Pulvermenge wird durch die lokale Strahlungsheizung 17 beheizt. Ist das Pulver hinreichend vorgeheizt, fährt die Beschichtungseinheit 14a-c über die Arbeitsebene 10 und trägt dabei, wie oben beschrieben, die Pulverschicht auf.

Durch das Vorheizen des pulverförmigen Aufbaumaterials 13 vor seinem Aufbringen als Pulverschicht 31 mittels der lokalen Strahlungsquelle 17 kann in der aufgebrachten Pulverschicht schneller eine höhere Temperatur erzielt werden, ohne das dafür extra eine Heizvorrichtung mit Heizdrähten in der Beschichtereinheit 14a-c selber integriert werden muss. Dadurch wird weniger Heizzeit durch die globale Strahlungsheizung 16 benötigt, was zu einer kürzeren Bauzeit und somit zu einer Produktivitätssteigerung führen kann. Außerdem sind die aufgetragenen Schichten gleichmäßiger durchwärmt und Temperaturspitzen, wie sie beim Kontakt mit einer Drahtheizung entstehen, werden vermieden, wodurch die Qualität des hergestellten Objekts verbessert werden kann.

In einer Abwandlung der ersten Ausführungsform ist die lokale Strahlungsheizung 17 nicht ortsfest angeordnet, sondern wird gemeinsam mit der Beschichtungseinheit 14a-c verfahren. Dadurch kann der Heizvorgang während des Beschichtungsvorgangs weitergeführt und verhindert werden, dass das vorgeheizte Pulver während des Beschichtens wieder abkühlt.

Während das Vorheizen des pulverförmigen Aufbaumaterials durch eine lokale Strahlungsheizung gemäß der ersten Ausführungsform in der beweglichen Beschichtungseinheit selber vorgenommen wird, die auch das Auftragen des Pulvers auf die Arbeitsebene durchführt, enthält der Beschichter gemäß einer zweiten Ausführungsform zum Vorheizen des pulverförmigen Aufbaumaterials ein getrennt von der Beschichtungseinheit ausgebildetes Vorheizmodul. Fig. 3 ist eine vergrößerte schematische Schnittansicht des Vorheizmoduls gemäß der zweiten Ausführungsform.

Das Vorheizmodul 40 enthält einen in der vorliegenden Ausführungsform im Querschnitt trichterförmigen Behälter 41, der zur Aufnahme einer vorbestimmten Menge pulverförmigen Aufbaumaterials 13 geeignet ist, und eine Dosiervorrichtung 42, mittels derer pulverförmiges Aufbaumaterial dosiert an die verfahrbare (in der Figur nicht dargestellte) Beschichtungseinheit 14a-c abgegeben werden kann.

Vorzugsweise enthält das Vorheizmodul 40 weiter eine Gaszufuhr 43, über die ein Gas, vorzugsweise ein Schutzgas, zum Fluidisieren des pulverförmigen Aufbaumaterials 13 in den Innenraum des Behälters 41 geleitet wird. Der Eintritt des Gases erfolgt dabei über die Innenwand 44 des Behälters 41, die mit Öffnungen versehen oder als poröse Platte gebildet sein kann, und/oder über einen eigenen, in der Figur nicht gezeigten Fluidisierungseinsatz.

Das Vorheizmodul 40 enthält ferner eine Strahlungsheizung 47 zum Erwärmen des in dem Behälter 41 aufgenommenen pulverförmigen Aufbaumaterials 13. Die Strahlungsheizung 47 ist vorzugsweise zumindest in einem vordefinierten vertikalen Abstand von der Oberfläche des zu beheizenden pulverförmigen Aufbaumaterials 13 bzw. von den anderen Elementen des Vorheizmoduls 40 angeordnet. Schließlich enthält das Vorheizmodul 40 eine Freiblaseinrichtung 48, die zum Erzeugen eines Gasstroms 49 geeignet ist.

Im Betrieb nimmt das Vorheizmodul 40 von einem Pulverauslass 12a des Vorratsbehälters 12 über dessen Dosiervorrichtung 12b eine vorbestimmte Menge von untemperiertem pulverförmigen Aufbaumaterial 13 in den Behälter 41 auf. Diese vorbestimmte Pulvermenge ist vorzugsweise gleich oder größer als die Pulvermenge, die zum Auftragen einer Schicht des pulverförmigen Aufbaumaterial 13 benötigt wird. Das in den Behälter 41 aufgenommene Pulver wird dann mittels der Strahlungsheizung 47 erwärmt. Zusätzlich kann es mittels eines über die Gaszufuhr 43 zugeleiteten, vorzugsweise beheizten Gases fluidisiert und/oder mit einem (in der Figur nicht gezeigten Rührwerk) umgerührt werden. Währenddessen erzeugt die Freiblaseinrichtung 48 einen Gasstrom 49, vorzugsweise aus einem Schutzgas, zwischen der Oberfläche des pulverförmigen Aufbaumaterials 13 und der Strahlungsheizung 47 und verhindert dadurch, dass aufgewirbeltes Pulver 13 an die Oberfläche der Strahlungsheizung 47 gelangt und diese verschmutzt. Das vorgeheizte Pulver 13a wird dann mittels der Dosiervorrichtung 42 des Vorheizmoduls an die in der ersten Ausführungsform beschriebene Beschichtereinheit 14a-c abgegeben, die eine Pulverschicht 31 aus dem vorgeheizten Pulver aufträgt.

Dabei kann das Vorheizmodul 40 ortsfest in der Nähe des Pulverauslasses 12a des Vorratsbehälters 12 angeordnet sein und die gesamte für das Auftragen einer Pulverschicht 31 erforderliche Pulvermenge an die Beschichtereinheit 14a-c vor ihrem Verfahren über das Baufeld abgeben. Es kann aber auch gemeinsam mit der Beschichtereinheit 14a-c über das Baufeld verfahren werden und während des Verfahrens allmählich Pulver in die Beschichtereinheit 14a-c nachdosieren.

Dieses von der Beschichtereinheit 14a-c getrennt angeordnete Vorheizmodul, durch das die Vorgänge des Vorheizens und des Beschichtens räumlich und zeitlich getrennt voneinander erfolgen können, ermöglicht es in besonderer Weise, das pulverförmige Aufbaumaterial homogen und schnell aufzuheizen, Verklumpungen zu vermeiden und eine optimierte Dosierung in die Beschichtungseinheit durchzuführen.

Die Form des Behälters des Vorheizmoduls ist nicht auf die oben beschriebene Trichterform eingeschränkt, sondern kann eine beliebige Form sein, die zur Aufnahme und zum Beheizen einer begrenzten Pulvermenge geeignet ist.

Die Merkmale der oben beschriebenen Ausführungsformen können, soweit möglich, auch miteinander kombiniert sein. So kann z.B. auch für die ortsfeste oder mit der Beschichtereinheit verfahrbare Strahlungsheizung 17 der ersten Ausführungsform eine Freiblaseinrichtung vorhanden sein, wie sie für die Strahlungsheizung 47 der zweiten Ausführungsform beschrieben ist, oder es kann z.B. die Fluidisierung, die gemäß der zweiten Ausführungsform optional im Vorheizmodul vorgenommen wird, auch in der Beschichtereinheit 14a-14c vorgenommen werden.

Die Beschichtung kann auch mittels eines sich hin- und herbewegenden Beschichters in zwei Beschichtungsrichtungen erfolgen. In diesem Fall können auf beiden Seiten des Baufelds ein Vorrätsbehälter und/oder eine ortsfeste lokale Strahlungsheizung angeordnet sein oder die lokale Strahlungsheizung kann mit der Beschichtungseinheit mitbewegt werden.

Die Beschichtungsart ist nicht auf die oben beschriebene translatorische Beschichtung eingeschränkt, sie kann auch als Rotationsbeschichtung verwirklicht sein. In diesem Fall ist die Beschichtungsrichtung die Drehrichtung der Beschichtungseinheit während des Beschichtens.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines pulverförmigen Aufbaumaterials angewendet werden.

Der Laser kann beispielsweise einen Gas- oder Festkörperlaser oder jede andere Art von Laser umfassen. Allgemein kann jede Einrichtung verwendet werden, mit der Energie selektiv auf eine Schicht des Aufbaumaterials aufgebracht werden kann. Anstelle eines Lasers können beispielsweise eine Mehrzahl von Lasern, eine andere Lichtquelle, ein Elektronenstrahl oder jede andere Energie- bzw. Strahlenquelle verwendet werden, die geeignet ist, das Aufbaumaterial zu verfestigen. Auch auf das selektive Maskensintern, bei dem eine ausgedehnte Lichtquelle und eine Maske verwendet werden, oder auf das Absorptions- bzw. Inhibitionssintern kann die Erfindung angewendet werden.

Anstelle des Einbringens von Energie kann das selektive Verfestigen des aufgebrachten Aufbaumaterials auch durch 3D-Drucken erfolgen, beispielsweise durch Aufbringen eines Klebers. Allgemein bezieht sich die Erfindung auf das Herstellen eines Objekts mittels schichtweisen Aufbringens und selektiven Verfestigens eines Aufbaumaterials unabhängig von der Art und Weise, in der das Aufbaumaterial verfestigt wird.

Als Aufbaumaterial können verschiedene Arten von Pulver verwendet werden, insbesondere Metallpulver, Kunststoffpulver, Keramikpulver, Sand, gefüllte oder gemischte Pulver.

Als Schutzgas für das Fluidisieren des pulverförmigen Aufbaumaterials und/oder das Freiblasen der Strahlungsheizung wird je nach verwendetem Aufbaumaterial ein Gas verwendet, das mit dem Aufbaumaterial im Wesentlichen keine chemische Reaktion eingeht, beispielsweise bei Kunststoffpulver vorzugsweise Stickstoff oder bei Metallpulver vorzugsweise Argon und/oder Stickstoff.

## Patentansprüche

1. Verfahren zum Herstellen eines dreidimensionalen Objekts (2) durch schichtweises Aufbringen und selektives Verfestigen eines pulverförmigen Aufbaumaterials (13) mit den Schritten:
Aufbringen einer Schicht (31) des pulverförmigen Aufbaumaterials (13) auf ein Baufeld (10) mittels eines Beschichters (14), der eine über das Baufeld (10) in einer Beschichtungsrichtung (B) fahrende Beschichtungseinheit (14a-c) enthält,
selektives Verfestigen der aufgebrachten Pulverschicht (31) an Stellen, die einem Querschnitt des herzustellenden Objekts (2) entsprechen, und
Wiederholen der Schritte des Aufbringens und des selektiven Verfestigens, bis das Objekt (2) fertiggestellt ist,
wobei das auf das Baufeld (10) aufzubringende pulverförmige Aufbaumaterial (13) im Beschichter (14) vor dem Aufbringen mittels einer Strahlungsheizung (17, 47) lokal beheizt wird,
wobei die Strahlungsheizung (17, 47), die das auf das Baufeld aufzubringende pulverförmige Aufbaumaterial (13) im Beschichter (14) vor dem Aufbringen beheizt, eine lokal wirkende Strahlungsheizung (17, 47) umfasst, die im Wesentlichen dimensioniert ist, um das Beheizen des pulverförmigen Aufbaumaterials (13) im Beschichter (14) durchzuführen, und die bevorzugt zusätzlich zu einer nichtlokal wirkenden Strahlungsheizung (16) betrieben wird, welche letztere so dimensioniert ist, dass sie flächig das pulverförmige Aufbaumaterial nach der Aufbringung auf das gesamte Baufeld (10) mittels Strahlung beheizt,
wobei der Beschichter (14) ein in mindestens einer bestimmungsgemäßen Betriebsstellung zwischen der Beschichtungseinheit (14a-c) des Beschichters (14) und der Strahlungsheizung (17, 47) angeordnetes Vorheizmodul (40) umfasst,
wobei die Strahlungsheizung (17, 47) und das Vorheizmodul (40) ortsfest angeordnet sind
wobei das Vorheizmodul (40) eine Portion des pulverförmigen Aufbaumaterials (13) aufnimmt,
wobei das pulverförmige Aufbaumaterial (13) mindestens auch im Vorheizmodul (40) mittels der Strahlungsheizung (17, 47) beheizt wird,
wobei die Beschichtungseinheit (14a-c) vor dem Aufbringen einer Pulverschicht (31) zu dem Ort der Strahlungsheizung (17, 47) verfahren wird und
wobei das beheizte pulverförmige Aufbaumaterial (13a) vom Vorheizmodul (40) an die Beschichtungseinheit (14a-c) weitergegeben wird.

2. Verfahren gemäß Anspruch 1, wobei die Beschichtungseinheit (14a-c) in Beschichtungsrichtung (B) und in die Gegenrichtung zur Beschichtungsrichtung (B) mindestens bereichsweise abgeschlossen ist.

3. Verfahren gemäß einem der Ansprüche 1 bis 2, bei dem
der Beschichter (14) an einem Befüllungsort (12) mit pulverförmigem Aufbaumaterial (13) befüllt wird, wobei
die Strahlungsheizung (17, 47) in oder gegen Beschichtungsrichtung (B) von dem Befüllungsort (12) beabstandet ist.

4. Verfahren gemäß einem der Ansprüche 1 bis 3, bei dem der Beschichter (14) zwischen dem Vorheizmodul und der Beschichtungseinheit (14a-c) eine weitere Einheit, insbesondere eine Dosiereinheit, umfasst, die bevorzugt beim Aufbringen der Schicht (31) gemeinsam mit der Beschichtungseinheit (14a-c) verfahren wird und das pulverförmige Aufbaumaterial in die Beschichtungseinheit (14a-c) dosiert.

5. Verfahren gemäß einem der Ansprüche 1 bis 4, bei dem das auf das Baufeld aufzubringende pulverförmige Aufbaumaterial (13) während des Beheizens zusätzlich fluidisiert wird, vorzugsweise mittels Durchleiten eines beheizten Schutzgases.

6. Verfahren gemäß einem der Ansprüche 1 bis 5, bei dem die Strahlungsheizung (17, 47) in einem vordefinierten Abstand von der Oberfläche des zu beheizenden pulverförmigen Aufbaumaterials (13) angeordnet ist.

7. Vorrichtung (1) zum Herstellen eines dreidimensionalen Objekts (2) durch selektives schichtweises Verfestigen von pulverförmigem Aufbaumaterial (13), umfassend:
einen in einer Beschichtungsrichtung (B) über ein Baufeld (10) bewegbaren Beschichter (14), der eine über das Baufeld (10) in einer Beschichtungsrichtung (B) fahrende Beschichtungseinheit (14a-c) enthält, die in Beschichtungsrichtung (B) und in die Gegenrichtung zur Beschichtungsrichtung (B) mindestens bereichsweise abgeschlossen ist, zum Aufbringen einer Schicht des pulverförmigen Aufbaumaterials (13) auf das Baufeld (10),
eine Verfestigungsvorrichtung (20) zum selektives Verfestigen der aufgebrachten Pulverschicht (31) an Stellen, die einem Querschnitt des herzustellenden Objekts (2) entsprechen, und
eine Strahlungsheizung (17, 47),
wobei die Strahlungsheizung (17, 47), die das auf das Baufeld aufzubringende pulverförmige Aufbaumaterial (13) im Beschichter (14) vor dem Aufbringen beheizt, eine lokal wirkende Strahlungsheizung (17, 47) umfasst, die im Wesentlichen dimensioniert ist, um das Beheizen des pulverförmigen Aufbaumaterials (13) im Beschichter (14) durchzuführen, und die bevorzugt zusätzlich zu einer nichtlokal wirkenden Strahlungsheizung (16) betrieben wird, welche letztere so dimensioniert ist, dass sie flächig das pulverförmige Aufbaumaterial nach der Aufbringung auf das gesamte Baufeld (10) mittels Strahlung beheizt,
wobei der Beschichter (14) ein in mindestens einer bestimmungsgemäßen Betriebsstellung zwischen der Beschichtungseinheit (14a-c) des Beschichters (14) und der Strahlungsheizung (17, 47) angeordnetes Vorheizmodul (40) umfasst,
wobei die Strahlungsheizung (17, 47) und das Vorheizmodul (40) ortsfest angeordnet sind,
wobei das Vorheizmodul (40) ausgebildet ist, eine Portion des pulverförmigen Aufbaumaterials (13) aufzunehmen, und
wobei die Vorrichtung ausgebildet und/oder gesteuert ist:
die Schritte des Aufbringens und des selektiven Verfestigens zu wiederholen, bis das Objekt (2) fertiggestellt ist, und
das auf das Baufeld aufzubringende pulverförmige Aufbaumaterial (13) im Beschichter vor dem Aufbringen mittels der Strahlungsheizung (17, 47) lokal zu beheizen,
das pulverförmige Aufbaumaterial (13) mindestens auch im Vorheizmodul (40) mittels der Strahlungsheizung (17, 47) zu beheizen,
die Beschichtungseinheit (14a-c) vor dem Aufbringen einer Pulverschicht (31) zu dem Ort der Strahlungsheizung (17, 47) zu verfahren und
das beheizte pulverförmige Aufbaumaterial (13a) vom Vorheizmodul (40) an die Beschichtungseinheit (14a-c) weiterzugeben.

## Claims

1. Method for manufacturing a three-dimensional object (2) by means of layer-wise application and selective solidification of a pulverulent building material (13) comprising the steps of:
applying a layer (31) of the pulverulent building material (13) onto a build area (10) by means of an application device (14), wherein the application device (14) comprises a recoating unit (14a-c) movable across the build area in an application direction (B),
selectively solidifying the applied powder layer (31) at positions corresponding to a cross-section of the object to be manufactured, and
repeating the steps of applying and selectively solidifying until the object is completed,
wherein the pulverulent building material (13) to be applied onto the build area (10) is preheated locally by means of a radiant heater (17, 47) prior to being applied, wherein the radiant heater (17, 47) heating the pulverulent building material (13) to be applied onto the build area in the application device (14) before being applied comprises a locally effective radiant heater (17, 47) which is substantially dimensioned so as to perform heating of the pulverulent building material (13) in the application device (14), and which is preferably operated in addition to a non-locally effective radiant heater (16), wherein the latter is dimensioned so as to heat the pulverulent building material two-dimensionally by means of radiation after it has been applied onto the whole build area (10),
wherein the application device (14) comprises a preheating module (40) arranged in at least one operational position according to the intended use between a recoating unit (14a-c) of the application device (14) and the radiant heater (17, 47),
wherein the radiant heater (17, 47) and the preheating module (40) are arranged stationary,
wherein the preheating module (40) receives a portion of the pulverulent building material (13),
wherein the pulverulent building material (13) is at least also heated in the preheating module (40) by means of the radiant heater (17, 47),
wherein the recoating unit (14a-c) is moved to the location of the radiant heater (17, 47) before applying a powder layer (31), and
wherein the heated pulverulent building material (13a) is transferred from the preheating module (40) to the recoating unit (14a-c).

2. Method according to claim 1, wherein the recoating unit (14a-c) is at least partially closed in the application direction (B) and in the opposite direction.

3. Method according to one of the claims 1 to 2, wherein
the application device (14) is filled with the pulverulent building material (13) at a filling location (12), wherein
the radiant heater (17, 47) is spaced apart from the filling location (12) in an application direction (B) or in the opposite direction.

4. Method according to one of the claims 1 to 3, wherein the application device (14) comprises an additional unit, in particular a dosing unit, between the preheating module and the recoating unit (14a-c) which is preferably moved together with the recoating unit (14a-c) during application of the layer (31) and doses the pulverulent building material in the recoating unit (14a-c).

5. Method according to one of the claims 1 to 4, wherein the pulverulent building material (13) to be applied onto the build area is fluidized during heating, preferably by passing through heated protective gas.

6. Method according to one of the claims 1 to 5, wherein the radiant heater (17, 47) is arranged in a predefined distance from the surface of the pulverulent building material (13) to be heated.

7. Device (1) for manufacturing a three-dimensional object (2) by means of selective layer-wise solidification of pulverulent building material (13) comprising:
an application device (14) movable across a build area (10) in an application direction (B), comprising a recoating unit (14a-c) moving across the build area (10) in an application direction (B) and being at least partially closed in the application direction (B) and the opposite direction, for applying a layer of the pulverulent building material (13) onto the build area (10),
a solidification unit (20) for selectively solidifying the applied powder layer (31) at positions corresponding to a cross-section of the object to be manufactured, and
a radiant heater (17),
wherein the radiant heater (17, 47) heating the pulverulent building material (13) to be applied onto the build area in the application device (14) before being applied comprises a locally effective radiant heater (17, 47) which is substantially dimensioned so as to perform heating of the pulverulent building material (13) in the application device (14), and which is preferably operated in addition to a non-locally effective radiant heater (16), wherein the latter is dimensioned so as to heat the pulverulent building material two-dimensionally by means of radiation after it has been applied onto the whole build area (10),
wherein the application device (14) comprises a preheating module (40) arranged in at least one operational position according to the intended use between a recoating unit (14a-c) of the application device (14) and the radiant heater (17, 47),
wherein the radiant heater (17, 47) and the preheating module (40) are arranged stationary,
wherein the preheating module (40) is configured to receive a portion of the pulverulent building material (13), and
wherein the device is designed and/or controlled to:
repeat the steps of applying and selective solidification until the object (2) is completed,
locally heat the pulverulent building material (13) to be applied onto the build area in the application device before applying it by means of the radiant heater (17, 47),
heat the pulverulent building material (13) at least also in the preheating module (40) by means of the radiant heater (17, 47),
move the recoating unit (14a-c) to the location of the radiant heater (17, 47) before applying a powder layer (31), and
transfer the heated pulverulent building material (13a) from the preheating module (40) to the recoating unit (14a-c).

## Revendications

1. Un procédé de fabrication d'un objet tridimensionnel (2) par application couche par couche et solidification sélective d'un matériau de construction pulvérulent (13), comprenant les étapes:
application d'une couche (31) du matériau de construction pulvérulent (13) sur une zone de construction (10) au moyen d'un enducteur (14) comprenant une unité d'enduction (14a-c) se déplaçant sur la zone de construction (10) dans une direction d'enduction (B),
solidification sélective de la couche de poudre appliquée (31) à des endroits correspondant à une section transversale de l'objet (2) à fabriquer, et
répétition des étapes d'application et de solidification sélective jusqu'à ce que l'objet (2) soit achevé,
dans lequel le matériau de construction pulvérulent (13) à appliquer sur la zone de construction (10) est chauffé localement dans le l'enducteur (14) au moyen d'un dispositif de chauffage par rayonnement (17, 47) avant l'application,
dans lequel le dispositif de chauffage par rayonnement (17, 47) qui chauffe le matériau de construction pulvérulent (13) à appliquer sur la zone de construction dans l'enducteur (14) avant l'application, comprend un dispositif de chauffage par rayonnement à action locale (17, 47), qui est sensiblement dimensionné pour effectuer le chauffage du matériau de construction pulvérulent (13) dans l'enducteur (14) et qui est employé de préférence en plus d'un dispositif de chauffage par rayonnement (16) n'agissant pas localement, ce dernier étant dimensionné de manière à chauffer le matériau de construction pulvérulent par rayonnement de manière bidimensionnelle après son application sur toute la zone de construction (10),
dans lequel l'enducteur (14) comprend un module de préchauffage (40) disposé dans au moins une position de fonctionnement conformément à l'usage prévu entre l'unité d'enduction (14a-c) de l'enducteur (14) et le dispositif de chauffage par rayonnement (17, 47),
dans lequel le dispositif de chauffage par rayonnement (17, 47) et le module de préchauffage (40) sont disposés de manière stationnaire,
dans lequel le module de préchauffage (40) reçoit une partie du matériau de construction pulvérulent (13),
dans lequel le matériau de construction pulvérulent (13) est chauffé au moins aussi dans le module de préchauffage (40) au moyen du dispositif de chauffage par rayonnement (17, 47),
dans lequel l'unité d'enduction (14a-c) est déplacée vers le lieu du dispositif de chauffage par rayonnement (17, 47) avant l'application d'une couche de poudre (31), et
dans lequel le matériau de construction pulvérulent chauffé (13a) est transféré du module de préchauffage (40) à l'unité d'enduction (14a-c).

2. Le procédé selon la revendication 1, dans lequel l'unité d'enduction (14a-c) est fermée au moins dans quelques régions dans la direction d'enduction (B) et dans la direction opposée à la direction d'enduction (B).

3. Le procédé selon l'une quelconque des revendications 1 à 2, dans lequel
l'enducteur (14) est remplie de matériau de construction pulvérulent (13) à un lieu de remplissage (12), dans lequel
le dispositif de chauffage par rayonnement (17, 47) est espacé du lieu de remplissage (12) dans ou contre la direction d'enduction (B).

4. Le procédé selon l'une quelconque des revendications 1 à 3, dans lequel l'enducteur (14) comprend, entre le module de préchauffage et l'unité d'enduction (14a-c), une autre unité, en particulier une unité de dosage, qui est de préférence déplacée conjointement avec l'unité d'enduction (14a-c) pendant l'application de la couche (31) et dose le matériau de construction pulvérulent dans l'unité d'enduction (14a-c).

5. Le procédé selon l'une quelconque des revendications 1 à 4, dans lequel le matériau de construction pulvérulent (13) à appliquer sur la zone de construction est en outre fluidifié pendant le chauffage, de préférence en faisant passer à travers lui un gaz protecteur chauffé.

6. Le procédé selon l'une quelconque des revendications 1 à 5, dans lequel le dispositif de chauffage par rayonnement (17, 47) est disposé à une distance prédéfinie de la surface du matériau de construction pulvérulent (13) à chauffer.

7. Un dispositif (1) pour la fabrication d'un objet tridimensionnel (2) par solidification sélective couche par couche d'un matériau de construction en poudre (13), comprenant :
un enducteur (14) mobile dans une direction d'enduction (B) au-dessus d'une zone de construction (10) et comprenant une unité d'enduction (14a-c) se déplaçant au-dessus de la zone de construction (10) dans une direction d'enduction (B), l'unité d'enduction (14a-c) étant fermée au moins dans quelques régions dans la direction d'enduction (B) et dans la direction opposée à la direction d'enduction (B), pour appliquer une couche du matériau de construction pulvérulent (13) sur la zone de construction (10),
un dispositif de solidification (20) pour solidifier sélectivement la couche de poudre appliquée (31) à des endroits correspondant à une section transversale de l'objet (2) à produire, et
un dispositif de chauffage par rayonnement (17, 47),
dans lequel le dispositif de chauffage par rayonnement (17, 47), qui chauffe le matériau de construction pulvérulent (13) à appliquer sur la zone de construction dans l'enducteur (14) avant l'application, comprend un dispositif de chauffage par rayonnement à action locale (17, 47), qui est sensiblement dimensionné pour effectuer le chauffage du matériau de construction pulvérulent (13) dans l'enducteur (14), et qui est employé de préférence en plus d'un dispositif de chauffage par rayonnement (16) n'agissant pas localement, ce dernier étant dimensionné de manière à chauffer le matériau de construction pulvérulent par rayonnement de manière bidimensionnelle après son application sur toute la zone de construction (10),
dans lequel l'enducteur (14) comprend un module de préchauffage (40) disposé dans au moins une position de fonctionnement conformément à l'usage prévu entre l'unité d'enduction (14a-c) du enducteur (14) et le dispositif de chauffage par rayonnement (17, 47)
dans lequel le dispositif de chauffage par rayonnement (17, 47) et le module de préchauffage (40) sont disposés de manière stationnaire,
dans lequel le module de préchauffage (40) est configuré pour recevoir une partie du matériau de construction pulvérulent (13), et
dans lequel l'appareil est configuré et/ou contrôlé
de répéter les étapes d'application et de solidification sélective jusqu'à ce que l'objet (2) soit achevé, et
de chauffer localement le matériau de construction pulvérulent (13) à appliquer sur la zone de construction dans l'enducteur avant l'application au moyen du dispositif de chauffage par rayonnement (17, 47),
de chauffer le matériau de construction en poudre (13) au moins aussi dans le module de préchauffage (40) au moyen du dispositif de chauffage par rayonnement (17, 47),
de déplacer l'unité d'enduction (14a-c) vers le lieu du dispositif de chauffage par rayonnement (17, 47) avant l'application d'une couche de poudre (31), et
de transférer le matériau de construction pulvérulent chauffé (13a) du module de préchauffage (40) à l'unité d'enduction (14a-c).
